# EUROPEAN PATENT APPLICATION

(11) **EP 4 610 025 A1**
(43) Date of publication of application: **03.09.2025**
(21) Application number: 25160050.8
(22) Date of filing: 25.02.2025
(51) Int. Cl.: B29C 64/10, B29D 99/00, B32B 5/14, B32B 7/027, B33Y 10/00, B33Y 80/00, B64C 1/40, B64G 1/58, F03G 7/06

(54) **THERMALLY ADAPTIVE INSULATION**

(30) Priority: 28.02.2024 US 202418590247
(71) Applicant: Hamilton Sundstrand Corporation, Charlotte, NC 28217-4578 (US)
(72) Inventor: KILCHYK, Viktor, Lancaster, NY, 14086 (US); MERRITT, Brent J., Southwick, 01077 (US)
(74) Representative: Dehns

(57) **Abstract**

An insulation system, having a plurality of materials forming a composition gradient that defines a first coefficient of thermal expansion (CTE) and a second CTE that differs from the first CTE, wherein the plurality of materials include one or more of different metals, plastics, or fibers, and wherein: at a first temperature the insulation system has a first insulation thickness to provide first heat transfer characteristics; and at a second temperature that is less than the first temperature the insulation system has a second insulation thickness that is greater than the first insulation thickness to provide second heat transfer characteristics that are more insulative than the first heat transfer characteristics.

## Description

### BACKGROUND

The embodiments are directed to insulation and more specifically to thermally adaptive insulation.

Thermal stabilization of the interior of systems such as satellites, space modules and high-velocity vehicles, and for personal protective gear such as space suits may be challenging. For instance, a satellite surface temperature on a sun-shaded side and on a sun-exposed side may differ by hundreds of degrees. Temperatures on the sun-shaded side may be more than one hundred degrees below zero Celsius while temperatures on the sun-exposed side may be more than one hundred degrees above zero. For a space module rotating around a celestial body, this may cause undesired issues with an ECS (environment control system) of a spacecraft as well as other challenges.

### BRIEF DESCRIPTION

Disclosed is an insulation system, including a plurality of materials forming a composition gradient that defines a first coefficient of thermal expansion (CTE) and a second CTE that differs from the first CTE, wherein the plurality of materials include one or more of different metals, plastics, or fibers, and wherein: at a first temperature the insulation system has a first insulation thickness to provide first heat transfer characteristics; and at a second temperature that is less than the first temperature the insulation system has a second insulation thickness that is greater than the first insulation thickness to provide second heat transfer characteristics that are more insulative than the first heat transfer characteristics.

In embodiments, the system includes a base formed by the composition gradient defining the first CTE and the second CTE that differs from the first CTE, wherein the base defines an outer boundary and beads within the outer boundary, and each of the beads has a bead void, and each of the beads includes: first and second perimeter segments that are opposite each other and formed to define the first CTE; and third and fourth perimeter segments that are opposite each other, adjacent to the first and second perimeter segments, and formed to define the second CTE.

In embodiments, each perimeter segment has a radial inner surface and a radial outer surface; the radial inner surface of the first and second perimeter segments is formed to define the first CTE and the radial outer surface of the first and second perimeter segments is formed to define the second CTE; and the radial inner surface of the third and fourth perimeter segments is formed to define the second CTE and the radial outer surface of the third and fourth perimeter segments is formed to define of the first CTE.

In embodiments, adjacent ones of the beads are interconnected to form a lattice.

In embodiments, the outer boundary defines a first outer end and a second outer end, wherein the first and second outer ends are opposite each other; and the base includes a top elastomer layer that is disposed against the first outer end of the outer boundary and a bottom elastomer layer that is disposed against the second outer end of the outer boundary.

In embodiments, the base includes a support material that forms a support structure that defines the outer boundary of the base and a plurality of base voids, wherein each of the plurality of base voids is lined with one of the beads.

In embodiments, the support material is different from the beads.

In embodiments, the beads are oval shaped.

In embodiments, the beads are diamond shaped.

In embodiments, the composition gradient is formed of a first material having the first CTE and a second material having the second CTE, and one or both of the first and second materials is a bistable metal, alloy or composite.

In embodiments, the system includes a structural element that defines an outer boundary and extends in a first direction to first and second ends to define a length of the element and in a second direction to define a width of the element, the element including: a first layer that extends in the first direction between the first and second ends and has the first CTE; and a second layer that extends in the first direction between the first and second ends and has the second CTE that differs from the first CTE, wherein a layer junction is defined between the first and second layers, wherein the element is configured to define a first shape when the element is at the first temperature and a second shape when the element is at the second temperature that is lower than the first temperature.

In embodiments, the system includes one or more of: first fibers in the first layer that have the first CTE; and second fibers in the second layer that have the second CTE.

In embodiments, the first shape is linear, and the second shape is arcuate.

In embodiments, the first and second layers each define CTE gradients such that the first CTE and the second CTE have a same value at the layer junction.

In embodiments, one or both of the first and second layers are formed of first and second materials, one or both of which is a bistable metal, an alloy or a composite.

### BRIEF DESCRIPTION OF THE DRAWINGS

The following descriptions should not be considered limiting in any way. With reference to the accompanying drawings, like elements are numbered alike:
FIG. 1A shows a spacesuit that may be manufactured with thermally adaptive insulation according to an embodiment;
FIG. 1B shows a satellite with internal systems that may be manufactured with insulation according to an embodiment;
FIG. 1C shows a supersonic aircraft having a skin that may be manufactured with insulation according to an embodiment;
FIG. 1D shows, generally, an aircraft having systems that may be manufactured with insulation according to an embodiment;
FIG. 1E shows insulation that may be manufactured according to an embodiment, with the insulation in a compressed state;
FIG. 1F shows insulation that may be manufactured according to an embodiment, with the insulation in a semi-expanded state;
FIG. 1G shows insulation that may be manufactured according to an embodiment, with the insulation in an expanded state;
FIG. 2 shows a section of the insulation, having a base formed of a lattice of beads utilizing composition gradients across hoop-shaped walls, having outer and inner surfaces, to define perimeter segments along the walls of the beads, where the segments have different coefficients of thermal expansion (CTE) selected to provide a predetermined deformation;
FIG. 3 shows the lattice of beads in a normal state;
FIG. 4 shows the lattice of beads in a deformed state;
FIG. 5A shows an embodiment of a bead, where the bead is in a normal state;
FIG. 5B shows the bead of FIG. 5A in a deformed state;
FIG. 6A shows an alternate configuration of the section of the insulation, having a base that defines voids, where ones of the voids are lined with the beads shown in FIGS. 2-4, and where the base is in a normal state;
FIG. 6B shows the section of FIG. 6A in a deformed state;
FIG. 7 shows the lattice of beads of FIG. 2 with top and bottom elastomer layers;
FIG. 8 shows a plurality of the beads, from the lattice of beads of FIG. 2, with an elastomer segment extending from each bead, over an adjacent bead, to form a continuous elastomer boundary;
FIG. 9 shows an element of the insulation according to an embodiment, having a base formed of a composition gradient defined by two material layers that extend alongside each other, where the two material layers have different CTEs selected to provide a predetermined deformation when subjected to heating, and where one of the layers includes fibers, and the section is at a temperature T1;
FIG. 10 shows the element of FIG. 9 at a temperature T2>T1;
FIG. 11 shows an element of the insulation according to an embodiment, having a base formed of a composition gradient defined by two material layers that extend alongside each other, where the two material layers have different CTEs selected to provide a predetermined deformation when subjected to heating, and where both of the layers includes fibers having different CTEs, and the section is at a temperature T1;
FIG. 12 shows the element of FIG. 11 at a temperature T2>T1;
FIG. 13 shows an element of the insulation according to an embodiment, having a base formed of a composition gradient defined by two material layers that extend alongside each other, the materials have CTE gradients such that the mating surface between two materials has a common CTE, and a maximum difference in the CTEs is located at opposite sides of the element, at a temperature T1;
FIG. 14 shows the element of FIG. 13 at a temperature T2>T1;
FIG. 15 shows an oval shaped bead, which may be utilized in the disclosed embodiments, having a composition gradient of a plurality of materials or material layers (only one material layer is shown) having different coefficients of thermal expansion (CTE), at a temperature T1;
FIG. 16 shows the bead of FIG. 15, at a temperature T2>T1;
FIG. 17 shows a diamond shaped bead, which may be utilized in the disclosed embodiments, having a composition gradient of a plurality of materials or material layers (only one material layer is shown) having different coefficients of thermal expansion (CTE), at a temperature T1;
FIG. 18 shows the bead of FIG. 17, at a temperature T2>T1;
FIG. 19 shows a random shaped bead, which may be utilized in the disclosed embodiments, having a composition gradient of a plurality of materials or material layers (only one material layer is shown) having different coefficients of thermal expansion (CTE), at a temperature T1;
FIG. 20 shows the bead of FIG. 19, at a temperature T2>T1;
FIG. 21 shows an element that is equivalent to the element of the insulation, with a composition gradient formed of a plurality of materials having different coefficients of thermal expansion (CTE), at a temperature T1;
FIG. 22 shows the element of FIG. 21 at a temperature T2>T1; and
FIG. 23 shows an element similar to that of FIG. 21 at a temperature T2>T1, where a material interface allows free slip between layers, such the layers extend at different rates upon being heated.

### DETAILED DESCRIPTION

A detailed description of one or more embodiments of the disclosed apparatus are presented herein by way of exemplification and not limitation with reference to the Figures.

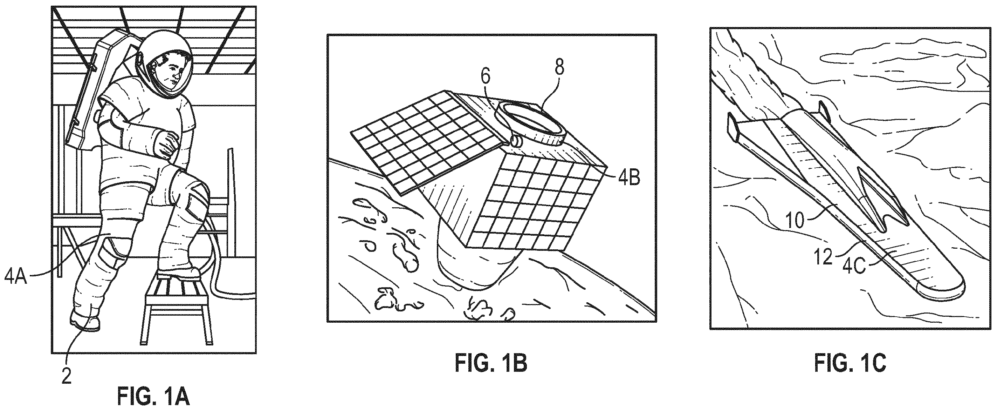

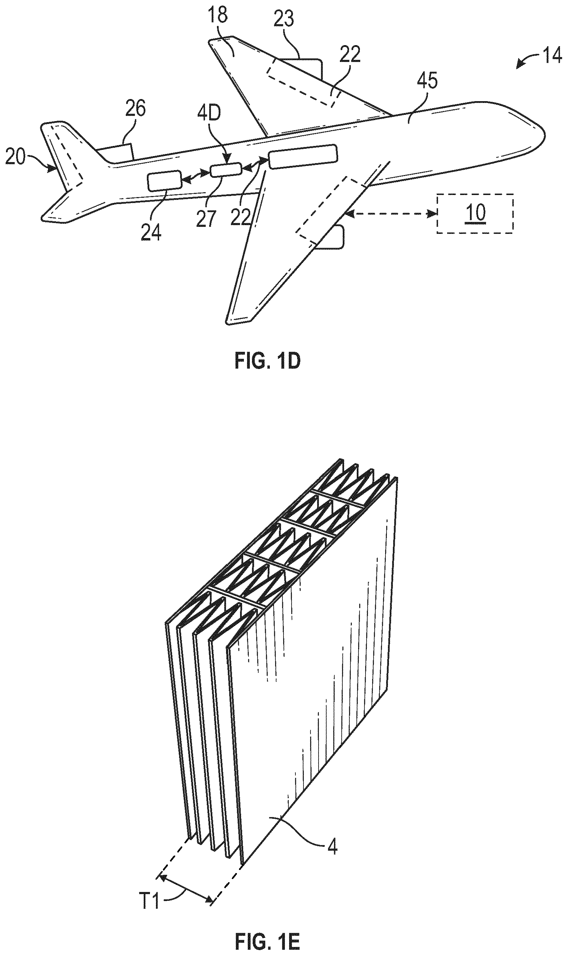

FIG. 1A shows a spacesuit 2 having thermally adaptive insulation 4A (and generally referenced as 4) protecting a wearer. FIG 1B shows a satellite 6 having insulation 4B protecting internal (or external) systems 8. FIG. 1C shows a supersonic aircraft 10 having insulation 4C manufactured as part of its skin 12 to protect internal components and compartments. FIG. 1D shows an aircraft 14 having a fuselage 16 with a wing 18 and tail assembly 20, which may have control surfaces 22. The wing 18 may include an engine 23, such as a gas turbine engine, and an auxiliary power unit 26 may be disposed at the tail assembly 20. The aircraft 14 may have an environmental control system (ECS) 22, an electronics bay 24 and a heat exchanger 27 that may be operationally coupled to either of these systems and components. Insulation 4D may be provided around any or all of the aircraft systems to ensure operation within desired parameters. It is to be appreciated that the embodiments may be implemented in other objects than the ones shown in FIGS. 1A-1D.

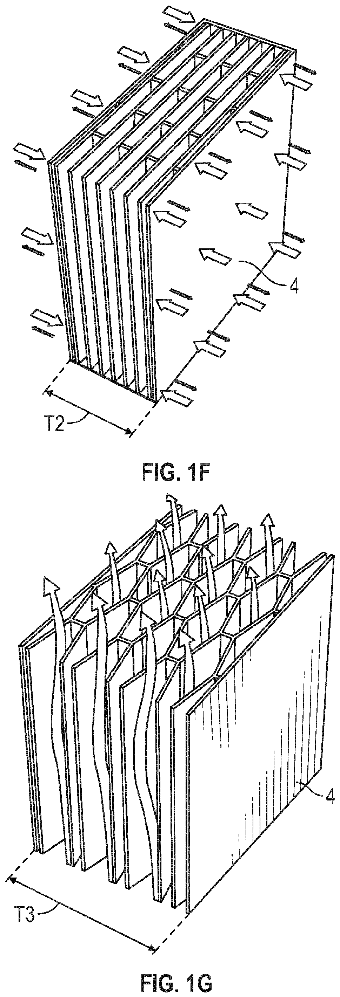

FIG. 1E shows insulation 4 that may be utilized in the disclosed embodiments. The insulation 4 is in a first state that is a relatively compressed state, having a first insulation thickness T1, resulting in a first thermal conductance and having first heat transfer characteristics. FIG. 1F shows the insulation 4 in a second state that is a semi-expanded state, having a second insulation thickness T2 that is greater than T1, resulting in a second thermal conductance and having second heat transfer characteristics that differs from the first conductance and first heat transfer characteristics. For example, the thicker insulation may have more air between insulation cells, which would increase its thermal resistance to heat transfer, reducing heat loss. This would be beneficial in conditions that are relatively cold compared with the conditions utilized for the insulation in the first state. FIG. 1G shows the insulation 4 in a third state that is a fully expanded state, having a thickness T3 that is greater than T2, resulting in a third thermal conductance and having third heat transfer characteristics that differs from the first and second conductance and heat transfer characteristics. For example, as indicated, the thicker insulation in the fully expanded state may have more air between insulation cells than the first and second states, which would increase its thermal capacitance over those states. This would be beneficial in conditions that are relatively cold compared with the conditions utilized for the insulation in the second state.

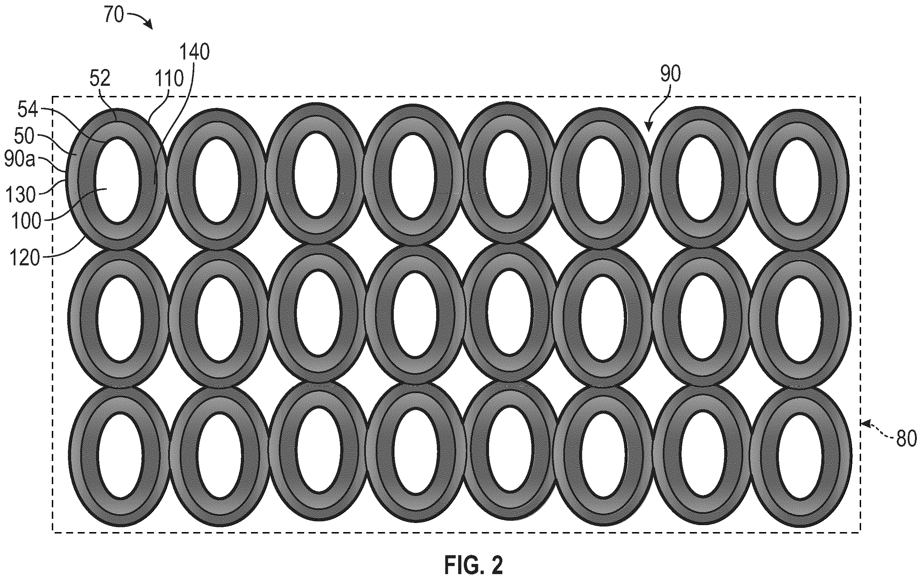

In one embodiment, as shown in FIG. 2, the insulation (or insulation system) 4 may be additively manufactured with a base 70 formed of a lattice or array (e.g., a plurality) of beads 90, each bead 90a of the beads 90 has a composition gradient defined by hoop-shaped walls 50, each having an outer surface (or layer or portion) 52, an inner surface 54, to define first through fourth perimeter segments 110, 120, 130, 140 (generally segments 115) along the walls of the bead 90. The segments 115 have different coefficients of thermal expansion (CTE) selected to provide a predetermined deformation, e.g., to expand or contract the beads 90 and thereby expand or contract the insulation 4.

The composition gradient may be formed of a first material having a first coefficient of thermal expansion (CTE) and a second material having a second CTE that differs from the first CTE. The composition gradient may be formed by the utilization of different metals or may be formed by thermoplastic polymer plastic, fillings or fibers, which may be straight or twisted. The base 70 may define an outer boundary 80 and the lattice of beads 90 within the boundary 80. The beads 90 may have an oval cross section, though such shape is not intended on limiting the scope of the embodiments.

Each of the beads 90 may have a bead void 100 or cavity or pore and may include the first and second perimeter segments 110, 120 that are opposite each other. The beads 90 may include the third and fourth perimeter segments 130, 140 that are opposite each other, adjacent to the first and second perimeter segments 110, 120. With this configuration, each of the beads 90 forms a circumferential (or perimeter) CTE gradient.

Adjacent ones of the beads 90 may be interconnected with each other, e.g., along the perimeter segments 110-140. With this interconnected configuration, the beads 90 form the lattice.

Changing a shape of the beads 90 influences convection inside of beads 90. Changing the shape also changes gas pressure inside of the beads 90 if the beads 90 are formed as closed pores. Adjacent bead walls 50 may become in contact or out of contact with each other, resulting in different dominant modes of heat transfer. Variable bead geometries may produce different thermal radiation rates, e.g., radiation may be intentionally scattered in different directions as compared with being one dimensional.

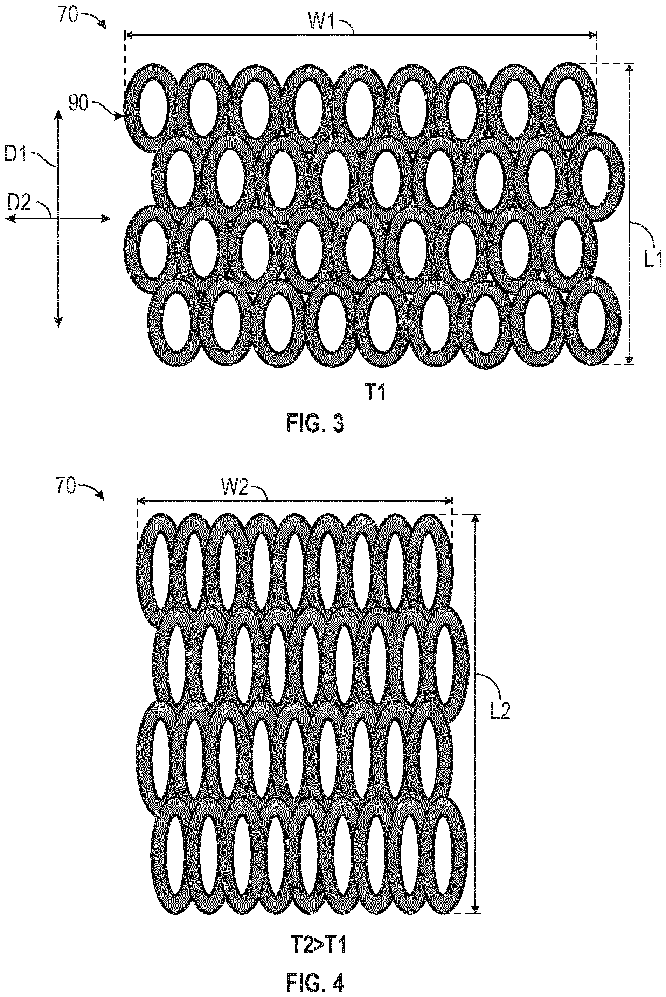

The beads 90 may be formed of a plastic and more specifically a fibrous plastic, or a bistable metal, alloy or composite. The beads 90 may be configured to change shape from a first shape to a second shape when subject to heating or cooling, due to the differing CTEs that provide the composition gradient. For example, when the beads 90 are subject to warmer temperatures, shape of the base 70 may change from a first state (FIG. 3) to a second state (FIG. 4), or vice versa if exposed to colder temperatures. In the first state, the base 70 may extend in a first direction D1 (or length direction) to define a first length L1 and in a second direction D2 (or width direction) to define a first width W1. In the second state (FIG. 4) the base 70 may extend in the first direction D1 to define a second length L2 and in the second direction D2 to define a second width W2. From the shape change, one of the first length and width L1, W1 may be greater or smaller than a corresponding one of the second length and width L2, W2. As shown in FIGS. 3 and 4, the first width W1 is greater than the second width W2 and the first and second lengths L1, L2 are the same as each other.

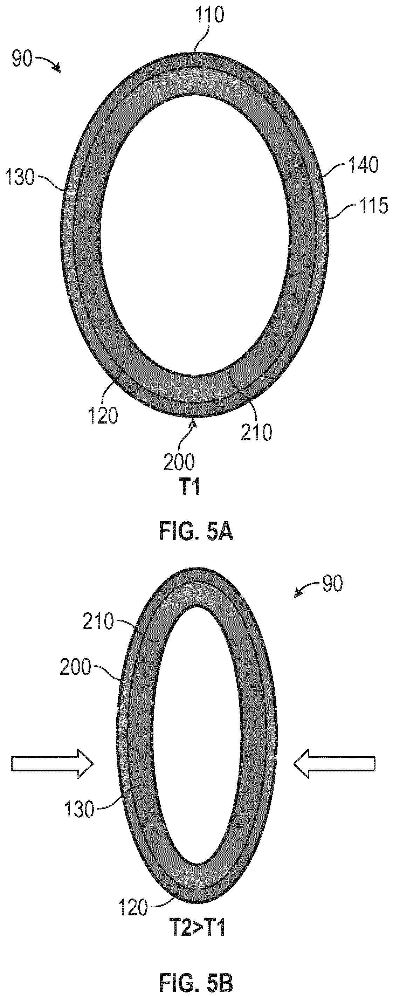

As shown in FIGS. 5A and 5B, in one embodiment, each perimeter segment 110-140 may have a radial inner surface (or layer or portion) 210 (the above referenced inner surface 54) and a radial outer surface (or layer or portion) 200 (the above referenced outer surface 52). It is to be appreciated that the use of the term radial in this context does not require a circular cross section but rather references a distance from a center of the bead 90. The inner surface 210 of the first and second perimeter segments 110, 120 may be formed to have a first CTE and the outer surface 200 of the first and second perimeter segments 110, 120 may be formed to have a second CTE. As indicated, this may be obtained from different metals (e.g., first and second materials corresponding to first and second metals, plastics, fillings, or fibers. The inner surface 210 of the third and fourth perimeter segments 130, 140 may be formed to have the second CTE and the outer surface 200 of the third and fourth perimeter segments 130, 140 may be formed to have the first CTE.

FIG. 5A shows the bead 90 in a first state, when the bead 90 is not subject to ambient heat energy, or when temperatures fall below a predetermined amount, and FIG. 5B shows the bead in a second state, when the bead 90 is subject to thermal input, e.g., when ambient temperatures are above a predetermined amount. The embodiment shown in FIGS. 5A and 5B provides a radial CTE gradient that results in a tailored deformation of the beads 90 upon being subject to different amounts of thermal input.

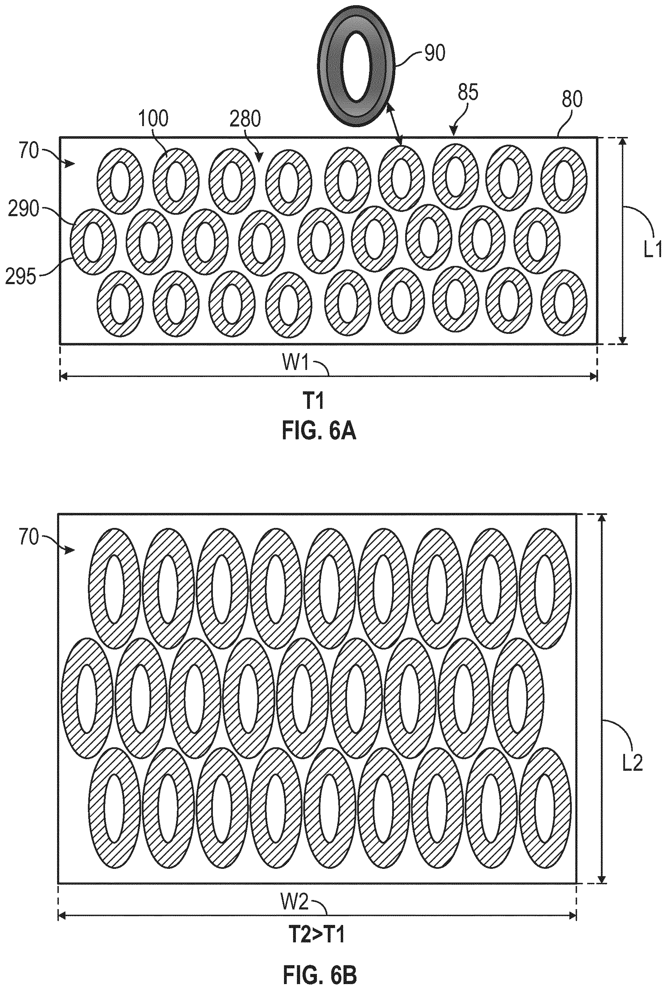

Turning to FIGS. 6A and 6B, in one embodiment, the base 70 of the insulation 4 may be manufactured with a support structure 280 that may define the outer boundary 80 of the base 70 and a plurality of base voids 290 (or internal base voids) or cavities. Each of the base voids 290 may be lined with one of above disclosed beads 90 and thus have a cavity surface 295 defining a cross sectional shape that is complementary to the shape of the beads 90. The support structure 280 may be formed of a support material that differs from the bead material. An exterior surface 85, surrounding the outer boundary 80 of the base 70, maybe be coated with the materials that form the bead 90. The support material may be an elastomer, a metal, an alloy or a composite, as can be the beads 90.

FIGS. 6A and 6B show the base 70 in the first state, having a first length and width L1, W1, and the second state, having a second length and width L2, W2. As indicated above, from the shape change, one of the first length and width L1, W1 may be greater or smaller than a corresponding one of the second length and width L2, W2. In the illustrated embodiment, the second width W2 is smaller than the first width W1 and the first and second lengths L1, L2 are the same as each other. As indicated, the smaller state may be a result of warmer ambient temperatures and the larger state may be the result of colder ambient temperatures, depending on design parameters of the materials and their coefficients of thermal expansion.

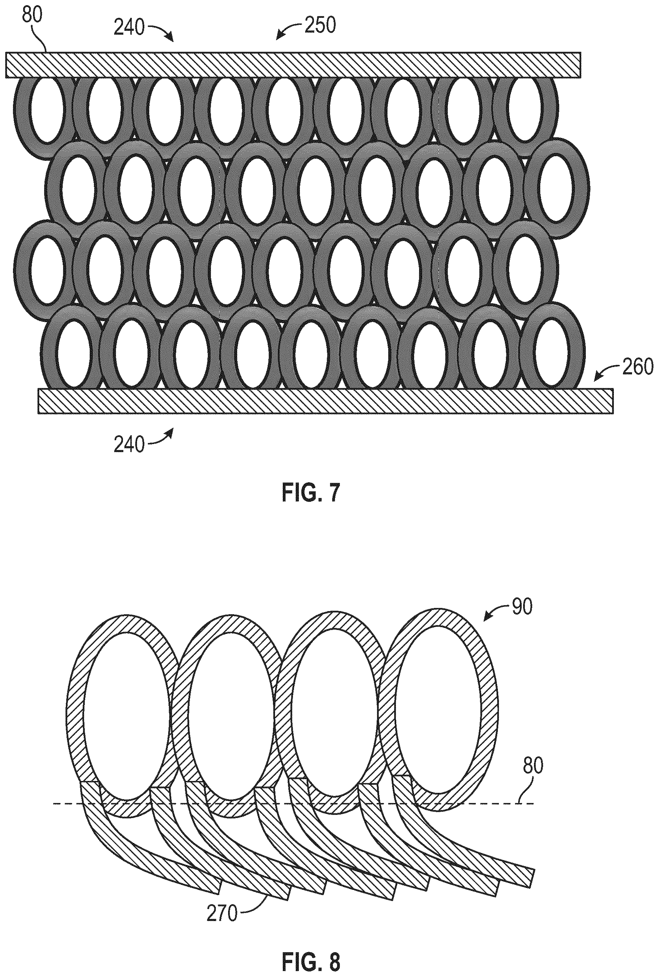

As shown in FIG. 7, in one embodiment, the outer boundary 80 of the lattice of beads 90 from FIG. 3 defines a first (top) outer end 230 and a second (bottom) outer end 240. The first and second outer ends 230, 240 are opposite each other. In one embodiment, a top elastomer layer 250 is disposed against the first outer end 230 of the outer boundary 80 and a bottom elastomer layer 260 is disposed against the second outer end 240 of the outer boundary 80.

As shown in FIG. 8, in one embodiment, an elastomer segment 270 extends from each of the beads 90 disposed at the outer boundary 80 of the lattice of beads 90 from FIG. 3. With this configuration, adjacent ones of the elastomer segments overlap each other to define a flexible outer boundary cover.

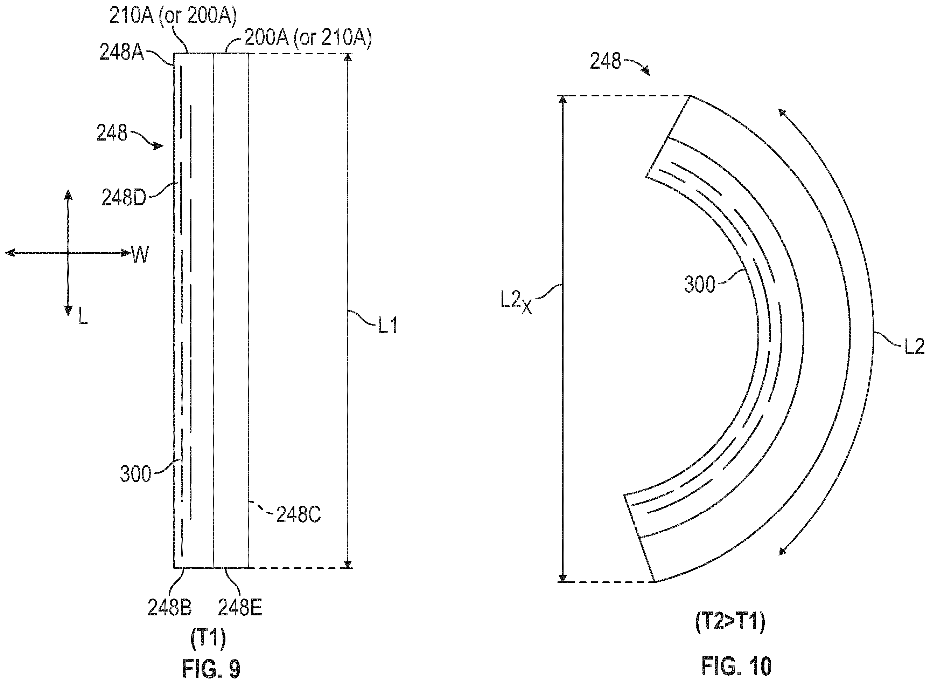

In the configuration of FIGS. 9 and 10 an equivalent linear insulative element 248 (or structural element) to the above structures is shown, such as the beads 90. The element 248 extends in a length direction L from a first end 248A to a second end 248B and a width direction W from a first side 248C to a second side 248D. The element 248 has first and second adjacent layers 200A (or 210A), equivalent to one of the outer and inner surfaces 200, 210 of the bead 90, that extend lengthwise between the first and second ends 248A, 248B and meet an interface 248E or layer junction.

First fibers 300, which are additively reinforcing fibers, are embedded in the one of the first and second adjacent layers 200A (or 210A). The first fibers 300 may have a CTE which differs from the CTEs of the layers 200A, 210A.

FIG. 9 shows the element 248 at a first temperature T1. FIG. 9B shows the controlled deformation of the element 248 when the ambient temperature is changed from T1 to a second temperature T2. As shown, at temperature T1, the element 248 has a length L1 and at temperature T2, the element 248 has a length L2 due to the controlled deformation. With increasing temperature, material volute increases. However, if the first fibers 300 have a lower CTE, the expansion is restricted. Having this reinforcement non-uniformly distributed may result in the non-uniform expansion and thus curvature or curvature change in shape. Therefore, while an expanded length would otherwise increase to L2 where L2>L1, due to the first fibers 300, the length projected on the x axis (vertical) increase only to (L2x< L1). The surface having the larger CTE, e.g., without the first fibers 300, would elongate, resulting in a curative increase.

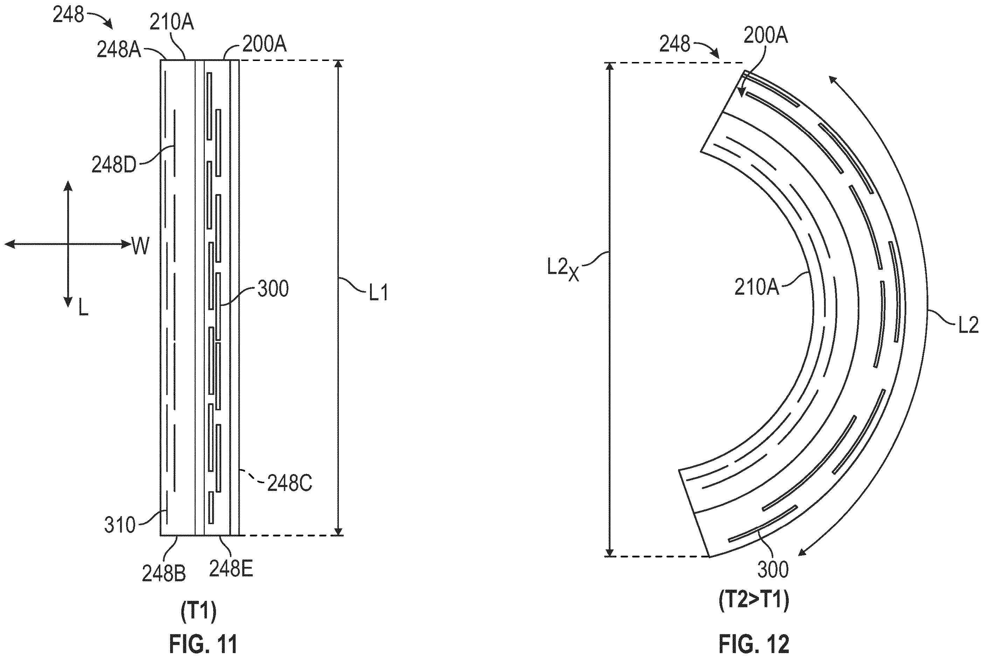

FIGS. 11 and 12 show another equivalent linear element 248 to the structures discussed above. The element 248 extends in a length direction L from a first end 248A to a second end 248B and a width direction W from a first side 248C to a second side 248D. The element 248 has first and second layers 200A, 210A, equivalent to the outer and inner surfaces 200, 210 of the bead 90 that extend lengthwise between the first and second ends 248A, 248B and meet an interface 248E or layer junction.

The first fibers 300 are embedded in the first layer 200A. Second fibers 310, which are also additively reinforcing fibers, are embedded in the second layer 210A. The second fibers 310 may have a CTE which differs from each of the other CTEs. In one embodiment, the CTEs of the fibers 300, 310 differ from each other while the other CTEs in the surrounding materials are the same as each other.

When the temperature is increased from T1 to T2, the controlled bend of the element 248 is shown in FIG. 12. As shown, at temperature T1, the element 248 has a length L1 and at temperature T2, the element 248 has a length L2x rather than a more expanded length L2 due to the controlled deformation. In FIGS. 11 and 12, the element 248 has a variable composition with a gradient in the CTE that may be produced with a variation of the type of the fibers 300, 310. This gradient is provided because each of the fibers 300, 310 would have a different CTE. The fibers 300, 310 may be straight or twisted and may be metallic, carbon or Kevlar fibers as nonlimiting examples. The fibers 300, 310 in each of the first and second layers 200A, 210A, i.e., the outer and inner surfaces 200, 210 of the bead 90, may be different from each other.

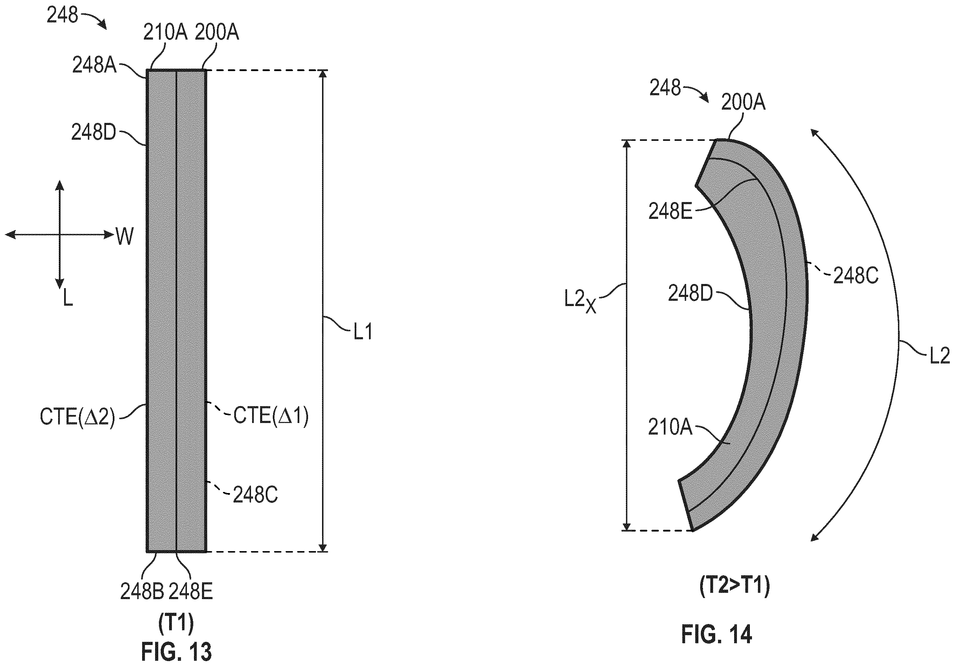

FIGS. 13 and 14 show an equivalent linear element 248 to the structures discussed above. The element 248 extends in a length direction L from a first end 248A to a second end 248B and a width direction W from a first side 248C to a second side 248D. The element 248 has first and second adjacent layers 200A(or 210A), equivalent to one of the outer and inner surfaces 200, 210 of the bead 90 that extend lengthwise between the first and second ends 248A, 248B and meet an interface 248E or layer junction.

Both first and second layers 200A, 210A are formed having CTEs that define gradients. The first layer 200Ahas a first CTE gradient CTE(Δ1) and the second layer 210A has a second CTE gradient CTE(Δ2). The gradients are formed such that they are different from each other at opposite sides 248C, 248D of the element (e.g., inside to outside) but are the same as each other at their interface or layer junction 248E. When the temperature is increased from T1 to T2, the controlled deformation of the element 248 is shown in FIG. 14. As shown, at temperature T1, the element 248 has a length L1 and at temperature T2, the element 248 has a length L2x rather than the more expanded length L2 due to the controlled deformation. In FIGS. 13 and 14, the variable CTE may be produced by gradually changing the CTE between the adjacent surfaces i.e., during printing in an additive manufacturing process, between the first and second layers 200A, 210A. In this embodiment, as with each embodiment disclosed herein, the adjacent layers may have different rate of thermal expansion due to the different CTEs.

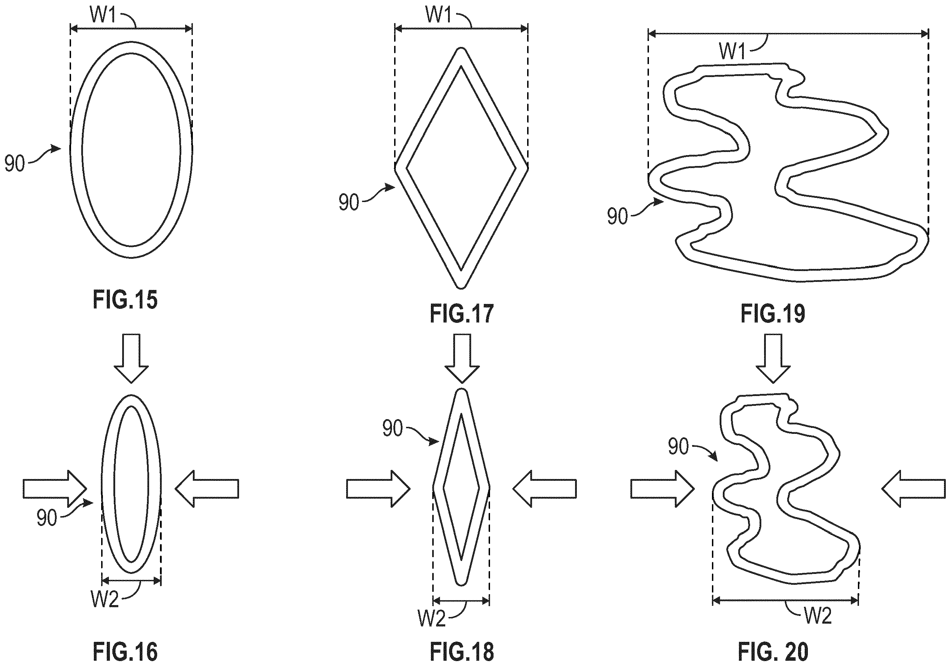

FIG. 15 shows an oval shaped bead 90, which may be formed as indicated above (e.g., FIG. 5A or the equivalent elements formed in a closed loop), in a normal state having a first width W1. FIG. 16 shows the oval bead 90 in a deformed state having a second width W2 that is less than the first width W1. As indicated, the beads 90 do not need to be arcuate in shape. FIG. 17 shows a diamond shaped bead 90 in a normal state having a first width W1. FIG. 18 shows the diamond shaped bead 90 in a deformed state having a second width W2 that is less than the first width W1. FIG. 19 shows a random shaped bead 90 in a normal state having a first width W1. FIG. 20 shows the random shaped bead 90 in a deformed state having a second width W2 that is less than the first width W1. The desired deformation shape may determine the shape of the bead 90.

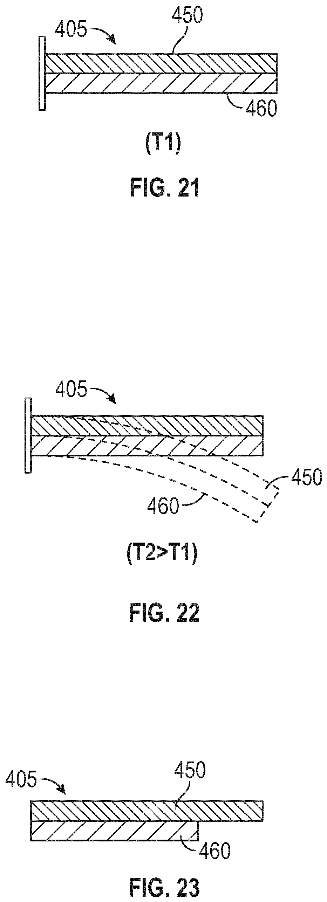

FIGS. 21 and 22 show an equivalent structure 405 to the configurations discussed above. Specifically, the first and second composition layers 450, 460 are at a temperature T1 in FIG. 21, and T2 that is greater than T1 in FIG. 22. The controlled thermal expansion shown in FIG. 22 results from the composition layers being integrally connected. That is, the first and second composition layers 450, 460 bend together in a predictable and controlled way. That is, the controlled thermal expansion of the first and second composition layers 450, 460 in the disclosed embodiments provides for controlled manipulation of the insulation 4 as disclosed herein. FIG. 23 shows an element 405 that is similar to that of FIG. 21 at a temperature T2>T1, where a material interface allows free slip between layers 450, 460, such the layers 450, 460 extend at different rates upon being heated, rather than deforming as shown in FIG. 22.

As can be appreciated, utilizing the above disclosed configurations to form the insulation 4, the insulation 4 may expand or contract, changing its thermal resistance characteristics, depending on ambient temperature conditions. However, additive technology allows these materials to be applied to multiple aerospace, thermal systems and turbomachinery applications. The insulation 4 of the disclosed embodiments may adapt not only to temperature but to a temperature gradient across the material. So that, when a heat flux is excessive, the insulation 4 may change shape creating larger voids 290 to provide better insulation. In one embodiment In one embodiment, the cavities (or voids 290) inside of the insulation 4 may include a reflective coating (e.g. 470, FIG. 18) to avoid heat propagation in the form of thermal radiation.

Manufacturing with the configurations disclosed above provide for controlled heat transfer and insulation depending on the ambient conditions. Example applications of the embodiments include spacesuits (FIG. 1A), space modules, or satellites (FIG. 1B) where temperature ranges can be relatively extreme. The insulation may be applied to a skin of an aircraft (FIG. 1C), where the outside environment can be relatively cold at altitude conditions and relatively hot at high speeds, such as during supersonic or hypersonic travel conditions, or travel on a hot day. An environmental control system (ECS) mounted within an aircraft (FIG. 1D) may also utilize the insulation to function optimally. A heat exchanger may utilize the insulation to prevent overheating or freezing of fluids. A compartment of an aircraft, such as an electronics bay adjacent to the outside of the aircraft, may utilize the insulation to protect electrical components. In these examples, an environment outside of the protected and insulated systems may vary depending on ambient conditions, requiring related devices or compartments to be insulated to keep a controlled and desired temperature range.

The embodiments provide a low weight and highly reliable thermal insulation. The embodiments also provide a high level of variability and controllability of thermal exposure to objects such as aircraft, satellites, spacesuits, etc. In a heat exchanger with an automated heat flux or stream outlet temperature, the insulation may be applied in fuel or oil heating systems to prevent coking or overheating, e.g., thereby providing, e.g., a micro smart heat exchanger.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention may include variations that fall within the scope of the invention as defined by the claims.

## Claims

1. An insulation system, comprising:
a plurality of materials forming a composition gradient that defines a first coefficient of thermal expansion, CTE, and a second CTE that differs from the first CTE,
wherein the plurality of materials include one or more of different metals, plastics, or fibers, and
wherein:
at a first temperature the insulation system has a first insulation thickness to provide first heat transfer characteristics; and
at a second temperature that is less than the first temperature the insulation system has a second insulation thickness that is greater than the first insulation thickness to provide second heat transfer characteristics that are more insulative than the first heat transfer characteristics.

2. The system of claim 1, comprising:
a base (70) formed by the composition gradient defining the first CTE and the second CTE that differs from the first CTE,
wherein the base defines an outer boundary (80) and beads (90) within the outer boundary, and
each of the beads has a bead void (100), and each of the beads includes:
first and second perimeter segments (110, 120) that are opposite each other and formed to define the first CTE; and
third and fourth perimeter segments (130, 140) that are opposite each other, adjacent to the first and second perimeter segments, and formed to define the second CTE.

3. The system of claim 2, wherein:
each perimeter segment (110, 120, 130, 140) has a radial inner surface (210) and a radial outer surface (200);
the radial inner surface of the first and second perimeter segments is formed to define the first CTE and the radial outer surface of the first and second perimeter segments is formed to define the second CTE; and
the radial inner surface of the third and fourth perimeter segments is formed to define the second CTE and the radial outer surface of the third and fourth perimeter segments is formed to define of the first CTE.

4. The system of claim 2 or 3, wherein
adjacent ones of the beads are interconnected to form a lattice.

5. The system of claim 2, 3 or 4, wherein:
the outer boundary defines a first outer end (230) and a second outer end (240), wherein the first and second outer ends are opposite each other; and
the base includes a top elastomer layer (250) that is disposed against the first outer end of the outer boundary and a bottom elastomer layer (260) that is disposed against the second outer end of the outer boundary.

6. The system of any of claims 2 to 5, wherein
the base includes a support material that forms a support structure (280) that defines the outer boundary of the base and a plurality of base voids (100), wherein each of the plurality of base voids is lined with one of the beads (90).

7. The system of claim 6, wherein
the support material is different from the beads.

8. The system of any of claims 2 to 7, wherein
the beads are oval shaped.

9. The system of any of claims 2 to 7, wherein
the beads are diamond shaped.

10. The system of any of claims 2 to 9, wherein the composition gradient is formed of a first material having the first CTE and a second material having the second CTE, and one or both of the first and second materials is a bistable metal, alloy or composite.

11. The system of claim 1, comprising:
a structural element (248) that defines an outer boundary and extends in a first direction to first and second ends to define a length of the element and in a second direction to define a width of the element,
the element including:
a first layer (200A) that extends in the first direction between the first and second ends and has the first CTE; and
a second layer (210A) that extends in the first direction between the first and second ends and has the second CTE that differs from the first CTE, wherein a layer junction is defined between the first and second layers,
wherein the element is configured to define a first shape when the element is at the first temperature and a second shape when the element is at the second temperature that is lower than the first temperature.

12. The system of claim 11, including one or more of:
first fibers (300) in the first layer that have the first CTE; and
second fibers (310) in the second layer that have the second CTE.

13. The system of claim 11 or 12, wherein
the first shape is linear, and the second shape is arcuate.

14. The system of claim 11, 12 or 13, wherein
the first and second layers each define CTE gradients such that the first CTE and the second CTE have a same value at the layer junction.

15. The system of any of claims 11 to 14, wherein
one or both of the first and second layers are formed of first and second materials, one or both of which is a bistable metal, an alloy or a composite.
